# EUROPEAN PATENT SPECIFICATION

(11) **EP 2 360 578 B1**
(45) Date of publication and mention of the grant of the patent: **24.04.2013**
(21) Application number: 11000985.9
(22) Date of filing: 08.02.2011
(51) Int. Cl.: G06F 9/44, G06F 11/32

(54) **A method for detecting user screens in mobile devices working under symbian operating system**
Verfahren zur Erkennung von Benutzerbildschirmen auf tragbaren Geräten, die unter dem Symbian-Betriebssystem arbeiten
Procédé pour détecter des écrans utilisateurs dans des dispositifs mobiles travaillant dans un système d'exploitation Symbian

(30) Priority: 15.02.2010 IL 20397110
(43) Date of publication of application: 24.08.2011
(73) Proprietor: Deutsche Telekom AG, 53113 Bonn (DE)
(72) Inventor: Mimran, David, Tel Aviv 64516 (IL); Shapira, Bracha, Beer Sheva 84728 (IL)
(74) Representative: Flaccus, Rolf-Dieter

(56) References cited:
- EP-A2- 1 450 244
- US-A1- 2007 011 334
- KARL FÜRLINGER ET AL: "Capturing and Visualizing Event Flow Graphs of MPI Applications", 25 August 2009 (2009-08-25), EURO-PAR 2009 PARALLEL PROCESSING WORKSHOPS : HPPC, HETEROPAR, PROPER, ROIA, UNICORE, VHPC, DELFT, THE NETHERLANDS, AUGUST 25-28, 2009 ; WORKSHOPS, SPRINGER, BERLIN, DE, PAGE(S) 218 - 227, XP019146107, ISBN: 978-3-642-14121-8 * abstract * * page 1 - page 3 *

## Description

### Field of the Invention

The present invention relates to the field of mobile communication devices. More particularly, the invention relates to a method detecting and identifying screens of every application that runs under the Symbian operating system (Symbian Software Limited, London, UK), which are displayed on the display of a mobile communication device.

### Background of the Invention

Symbian is an operating system (OS) designed for mobile devices and smartphones, with associated libraries, user interface, frameworks and reference implementations of common tools. Many mobile devices, such as cellphones and PDAs run specific mobile application (for example, messaging and email applications) under Symbian. Each application is operated by the user via a User Interface (UI) that displays various screens to the user and requires inputs from the user. Such applications require skills from the user, in order to use them properly. Therefore, application developers design new mobile applications according to the level of an average user, which is estimated. However, practically, each user has different level and skills and many times, it is hard to obtain a reliable feedback regarding usability problems while running an application.

Such feedback may be very important for the operators of mobile devices, such as cellular operators. When they sell mobile devices, they offer a variety of applications for sale to the user, which installs them in his mobile device. However, once the user leaves the point of sale, there is almost no feedback from him regarding usability problems that he has with respect to the installed applications. Such a feedback is critical for the cellular operator, so as to return to the application developers and try overcoming usability problems and/or offering help tips to a user that faces difficulties. For example, if the user wishes to use a menu that is a part of an application UI and the menu is not clear or problematic to understand and operate, in many cases it will take him time to switch between screens that belong to this application.

Other users may stop using an application due to usability problems. Currently, the cellular operator has no way of knowing that, due to the lack of a detailed feedback.

One way for trying solving this problem is a technical support service. However, such service requires calling a technician who starts asking questions and offering remote advices, which are not always sufficient since the user cannot always focus on the problem and describe it properly. Therefore, this way is cumbersome and not efficient for most users.

All the methods described above have not yet provided satisfactory solutions to the problem of providing a detailed feedback regarding usability problems of an application running under Symblan^{®} OS, in an efficient way.

It is an object of the present invention to provide a method for detecting and identifying displayed screens of an application of an application running under Symbian^{®} OS, required for providing a detailed feedback regarding usability problems in an efficient way, which does not require active reports from users.

It is another object of the present invention to provide a method for providing a detailed feedback regarding usability problems while using a mobile application, which can help application developers to overcome these problems.

Other objects and advantages of the invention will become apparent as the description proceeds.

### Summary of the Invention

The present invention is directed to a method for detecting and identifying displayed screens of a specific running application on the display of a mobile device operating under the Symbian operating system, according to which, a collection of signatures is generated in advance for all screens of the specific application by an external application, which scans each screen consistently in the same manner and extracts type and location data about all elements in the screen. These elements are in a tree structure of the screen. The resulting collection of signatures is saved in the memory of the mobile device and a first application that runs in the background is installed in the mobile device. This first application detects events such as the generation of each new screen in the specific application. Once an event (i.e., an intersection with a leaf or with a branch of the tree) is detected, the first background application ascends to the root of the tree, from which consistent scanning starts. The new screen is scanned by the first background application and whenever an element is detected during scanning, the element is identified and a temporary signature is extracted using all identified elements within the scanned screen. The temporary signature is delivered to a second background application that is also installed in the mobile device and the temporary signature is then compared with the signatures saved in the database. If there is a match, the new screen is identified by the second background application and the time in which the new screen appears is recorded.

A time line which contains the timing of all identified screens may be generated and saved in a remote location.

Each element detected during scanning may be identified by reading a code from a code DLL.

The specific running application may be the operating system of the mobile device, which can be a cellphone or a PDA.

### Brief Description of the Drawings

The above and other characteristics and advantages of the invention will be better understood through the following illustrative and non-limitative detailed description of preferred embodiments thereof, with reference to the appended drawings, wherein:
- Fig. 1 illustrates a typical window structure of an application and the process of detecting and identifying screens of an application that runs under Symbian OS, according to an embodiment of the invention; and
- Fig. 2 illustrates a tree representation of the window's element structure.

### Detailed Description of Preferred Embodiments

The present invention relates to a method that allows a third party code segment to detect and identify a specific Symbian window, which is visible on the screen of every running application on a mobile device having the Symbian OS.

The Symbian OS has special windowing system, where each window that is created within an application acts as a container to its objects which will be referred to hereinafter also as "controls". These objects may include, for example, textual headlines, buttons and menus. The developer of a Symbian application holds in its code pointers to the window structure and once controls are being created, they are added to a stack of controls and they can not be iterated later on during runtime. This conventional method of working within the Symbian OS limits the ability to understand which UI objects (or elements) exist within a window.

According to an embodiment of the invention, the logical structure of screens and windows of applications running under Symbian are detected and identified, so as to "understand" the window structure and generate a unique signature for each possible screen in the application, in order to be able accurately identify running screens. The detection and identification of screens is critical in the field of monitoring application usability and data collection.

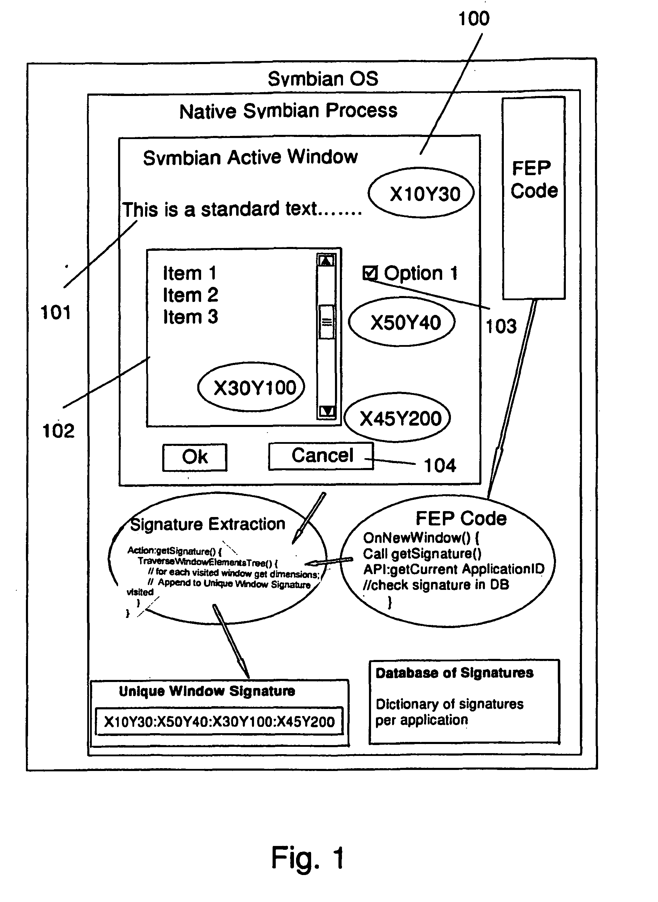

A typical window structure of an application is shown in Fig. 1 (upper part). An FEP (Front End Processor - commonly used to intercept events, to process them according to Symbian's logic and then to send the events to the application) acts as an interface between the user and an application. The active (top level) window comprises (starting from top left corner to the right and downward) a first textual element 101 (located at X10;Y30), a menu element 102 (located at X30;Y100), a check box 103 (located at X50;Y40) and a click button 104 (located at X45;Y200). This structure will be used for generating a unique signature for that window, which considers both the type of element and its appearance order within the window.

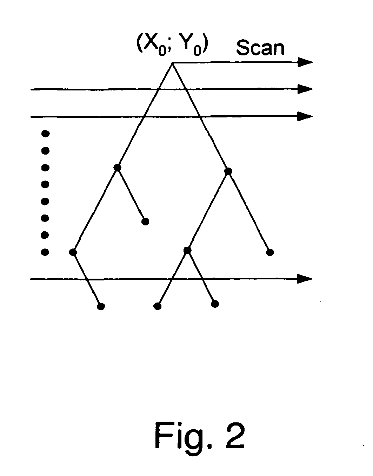

This structure can be mapped to a tree, as shown in Fig. 2. In an illustrative manner the top level window container can be viewed as a root of tree (X0;Y0), where the elements below can be an endpoint leaf or a branch, as illustrated.

The method proposed by the present invention allows a code segment that is not aware to the internal structure of a screen (created by a third party, such as an application developer) to accurately detect and identify it within the Symbian mobile OS.

The "detection" method proposed by present invention is based on the way the system organizes the relationship between top level window that is visible on screen and its UI elements (objects). The window that is displayed on screen is a kind of container to the UI elements within it, while each UI element within this window can be recursively considered as a container to the elements within this UI element. Each container can act as an element and vice versa, while each one of them has a common Symbian API (Application Programming Interface: the specific method prescribed by a computer operating system or by an application program by which a programmer writing an application program can make requests of the operating system or another application) that allows finding its predecessor and successor elements correspondingly.

The detection method starts with a system handle to top level window and then it runs the process, which will be referred to hereinafter also as "Signature Extraction", which traverses the tree of UI elements from top to bottom and from left to right, while each node of the tree is visited once. Each UI element can be queried for its physical position on screen and dimensions on screen. Together with the screen position and dimensions the method also captures the position within the logical elements tree where two variables are used, the level in the tree and the left to right position. All these variables of a UI element are transferred to a string format and constitute the interim signature of the element. During the traversal process, each interim signature of a UI element is appended to one string which is the overall screen signature. At the end of the traversal process, a unique string is generated, i.e., the signature that identifies the screen in a unique manner. The uniqueness of a screen signature is limited to the set of signatures per a specific application, so as to avoid collision of signatures of similar screens across different applications. This entails that the type of application is a part of the signature. In addition, the order of traversing must be consistent for all screens, to avoid the generation of two signatures for the same screen.

Returning back to Fig. 1, the signature generation process is illustrated. At the first step, a collection of signatures for all screens of a specific application is generated off-line by an external application which scans each screen consistently in the same manner and extracts data about all elements (type and location). At the next step, the resulting collection of signatures is saved in the memory of the mobile device. At the next step, a first application that runs in the background is installed in the mobile device and detects the generation of each new screen in that specific application (which is considered to be an "event"). Once an event is detected (i.e., there is an intersection with a leaf or with a branch of the tree), at the next step, the first background application ascend to the root of the tree, from which scanning starts.

At the next step, this first background application scans the new screen. Whenever an element is detected during scanning, it is identified by reading a code from a code library (a Dynamic Link Library - DLL which is a collection of small codes, any of which can be called when needed by the first running application). Then a temporary signature is extracted using all identified elements within the scanned screen. This temporary signature is delivered to a second application that is also installed in the mobile device and runs in the background compares the temporary signature with the signatures saved in the database. If there is a match, the second background application identifies the new screen and records the time in which the new screen appears. At the next step, a time line which contains all identified screens is generated and saved in the mobile device, or alternatively transmitted to a remote location for analysis. This timeline provides the required feedback, showing which screens of this specific application have been visited during a session and for how long.

## Claims

1. A method for providing a detailed feedback regarding usability problems to the developer of an application by detecting and identifying displayed screens of a specific running application on the display of a mobile device operating under the Symbian operating system, comprising:
a) generating, in advance, a collection of signatures for all screens of said specific application by an external application which scans each screen consistently in the same manner and extracts type and location data about all elements in said screen, being in a tree structure of said screen;
b) saving the resulting collection of signatures in the memory of said mobile device;
c) installing in said mobile device, a first application that runs in the background and detects events being the generation of each new screen in said specific application;
d) Once an event being an intersection with a leaf or with a branch of said tree is detected, allowing said first background application to ascend to the root of the tree, from which consistent scanning starts;
e) scanning said new screen by said first background application;
f) whenever an element is detected during scanning, identifying said element and extracting a temporary signature using all identified elements within the scanned screen;
g) delivering said temporary signature to a second background application that is also installed in said mobile device and comparing the temporary signature with the signatures saved in said memory or in a database; and
h) if there is a match, identifying the new screen by said second background application and recording the time in which said new screen appears.

2. A method according to claim 1, further comprising generating a time line which contains the timing of all identified screens and saving said timeline in a remote location.

3. A method according to claim 1, wherein each element detected during scanning is identified by reading a code from a code DLL.

4. A method according to claim 1, wherein the specific running application is the operating system of the mobile device.

5. A method according to claim 1, wherein the mobile device is a cellphone or a PDA.

## Patentansprüche

1. Verfahren zur Bereitstellung eines detaillierten Feedbacks zu Usability-Problemen an den Entwickler einer Anwendung durch Erkennen und Identifizieren angezeigter Bildschirme einer spezifischen laufenden Anwendung auf dem Bildschirm eines tragbaren Gerätes, das unter dem Symbian-Betriebssystem arbeitet, umfassend:
a) Generieren, im Voraus, einer Sammlung von Signaturen für alle Bildschirme der spezifischen Anwendung durch eine externe Anwendung, die jeden Bildschirm einheitlich, in gleicher Art und Weise scannt und Typ- und Ortsdaten zu allen in dem Bildschirmen enthaltenen Elementen, die sich in einer Baumstruktur des Bildschirms befinden, extrahiert,
b) Speichern der resultierenden Sammlung von Signaturen im Speicher des tragbaren Gerätes;
c) Installieren einer ersten Anwendung, die im Hintergrund ausgeführt wird und die Ereignisse erkennt, bei denen es sich um die Generierung eines jeweils neuen Bildschirms in der spezifischen Anwendung handelt, in dem tragbaren Gerät,
d) sobald ein Ereignis, bei welchem es sich um eine Überschneidung mit einem Blatt oder mit einem Zweig des Baumes handelt, erkannt wird, Zulassen, dass die erste Hintergrundanwendung zur Wurzel des Baumes aufsteigt, von wo aus das einheitliche Scannen beginnt,
e) Scannen des neuen Bildschirms durch die erste Hintergrundanwendung,
f) immer wenn während des Scannens ein Element erkannt wird, Identifizieren des Elementes und Extrahieren einer temporären Signatur unter Verwendung aller innerhalb des gescannten Bildschirms identifizierten Elemente,
g) Übergeben der temporären Signatur an eine zweite Hintergrundanwendung, die ebenfalls in dem tragbaren Gerät installiert ist, und Vergleichen der temporären Signatur mit den in dem Speicher oder in einer Datenbank gespeicherten Signaturen, und
h) bei Übereinstimmung, Identifizieren des neuen Bildschirms durch die zweite Hintergrundanwendung und erfassen der Zeit, innerhalb welcher der neue Bildschirm erscheint.

2. Verfahren nach Anspruch 1, des weiteren umfassend das Generieren einer Zeitlinie, welche den Zeitablauf aller identifizierten Bildschirme enthält, und Speichern der Zeitlinie an einem entfernten Ort.

3. Verfahren nach Anspruch 1, wobei jedes während des Scannens erkannte Element durch Lesen eines Codes aus einer Code-DLL identifiziert wird.

4. Verfahren nach Anspruch 1, wobei es sich bei der spezifischen laufenden Anwendung um das Betriebssystem des tragbaren Gerätes handelt.

5. Verfahren nach Anspruch 1, wobei das tragbare Gerät ein Mobilfunktelefon oder ein PDA ist.

## Revendications

1. Un procédé de fourniture d'une rétroaction détaillée concernant des problèmes d'utilisabilité au développeur d'une application par la détection et l'identification d'écrans affichés d'une application spécifique en cours d'exécution sur l'écran d'affichage d'un dispositif mobile fonctionnant sous le système d'exploitation Symbian, comprenant :
a) la génération, à l'avance, d'une collection de signatures pour tous les écrans de ladite application spécifique par une application externe qui numérise chaque écran uniformément de la même manière et extrait des données de type et d'emplacement relatives à tous éléments dans ledit écran qui sont dans une structure arborescente dudit écran,
b) l'enregistrement de la collection résultante de signatures dans la mémoire dudit dispositif mobile,
c) l'installation, dans ledit dispositif mobile, d'une première application qui est exécutée en arrière-plan et détecte des événements qui sont la génération de chaque nouvel écran dans ladite application spécifique,
d) si un événement qui est une intersection avec une feuille ou avec une branche dudit arbre est détecté, l'autorisation donnée à ladite première application d'arrière-plan de remonter jusqu'à la racine de l'arbre, à partir de laquelle une numérisation uniforme débute,
e) la numérisation dudit nouvel écran par ladite première application d'arrière-plan,
f) chaque fois qu'un élément est détecté au cours de la numérisation, l'identification dudit élément et l'extraction d'une signature temporaire au moyen de tous les éléments identifiés dans l'écran numérisé,
g) la fourniture de ladite signature temporaire à une deuxième application d'arrière-plan qui est également installée dans ledit dispositif mobile et la comparaison de la signature temporaire aux signatures enregistrées dans ladite mémoire ou dans une base de données, et
h) s'il y a une correspondance, l'identification du nouvel écran par ladite deuxième application d'arrière-plan et l'enregistrement de l'instant où ledit nouvel écran apparaît.

2. Un procédé selon la revendication 1, comprenant en outre la génération d'une ligne chronologique qui contient la chronologie de tous les écrans identifiés et l'enregistrement de ladite ligne chronologique dans un emplacement distant.

3. Un procédé selon la revendication 1, dans lequel chaque élément détecté au cours de la numérisation est identifié par la lecture d'un code provenant d'une DLL de codes.

4. Un procédé selon la revendication 1, dans lequel l'application spécifique en cours d'exécution est le système d'exploitation du dispositif mobile.

5. Un procédé selon la revendication 1, dans lequel le dispositif mobile est un téléphone cellulaire ou un assistant numérique personnel.
